# EUROPEAN PATENT APPLICATION

(11) **EP 0 792 765 A1**
(43) Date of publication of application: **03.09.1997**
(21) Application number: 97103136.4
(22) Date of filing: 26.02.1997
(51) Int. Cl.: B60J 7/057, H02P 7/00

(54) **Device for controlling an electric motor, in particular for operating a vehicle sun roof**

(30) Priority: 27.02.1996 IT TO960137
(71) Applicant: ROLTRA MORSE S.p.A., I-86077 Pozzilli (IT)
(72) Inventor: Giuliani,Bruno, 10156 Torino (IT)
(74) Representative: Cerbaro, Elena

(57) **Abstract**

The control device (1) is connected at the input to a supply section (3) and at the output to an electric motor (2), and includes a first and a second electromechanical relay (19, 20) having respective movable contacts (24, 30). The movable contact (24) of the first electromechanical relay (19) is connected to the motor (2) to permit supply to the motor; and the movable contact (30) of the second electromechanical relay (20) is located along the supply path of the first relay (19) to initially permit direct supply to the first relay when an external button (6) is operated, and to subsequently connect a limit switch (4). A capacitor (36) is connected parallel to the movable contact (30) of the second relay (20) to ensure electric continuity of the supply path of the first relay (19) during switching of the contact (30) of the second relay (20).

## Description

The present invention relates to a device for controlling an electric motor, in particular, an electric motor for operating a vehicle sun roof.

Drive assemblies fitted to a vehicle for operating, for example, windscreen-wipers, side windows or sun roofs, are known.

Such assemblies comprise an electric motor; and a control device for controlling the motor, and in turn comprising a number of active and passive electronic components, which, when operated, may emit conducted and radiated electromagnetic waves capable of generating noise and impairing the operation of other equipment in the vicinity of the control device.

Conversely, the drive assemblies themselves are also highly sensitive to electromagnetic interference generated by nearby equipment, and to radiated radiofrequency interference.

It is an object of the present invention to provide an electric motor control device designed to overcome the aforementioned drawbacks, and which, in particular, is insensitive to radiated radiofrequency noise.

According to the present invention, there is provided a control device for controlling an electric motor, in particular for a vehicle sun roof, and having a first, a second, a third and a fourth input, and a first and a second output; said first and said second input being connectable to a supply section; said first and said second output being connectable to said electric motor; said third and said fourth input being connected to each other via a first limit switch; said control device comprising a first electromechanical relay having a first contact and connectable between a first and a second reference potential line via switching means; and said first contact being movable between a first position connecting said first and said second output, and a second position connecting said first input and said first output; characterized by comprising a second electromechanical relay connected between said first input and said fourth input, and having a second contact movable between a first position connecting said second and said third input, and a second position connecting said second input and said fourth input.

A number of preferred, non-limiting embodiments of the present invention will be described by way of example with reference to the accompanying drawings, in which:
Figure 1 shows an electric diagram of a first embodiment of the control device according to the invention;
Figure 2 shows an electric diagram of a second embodiment of the control device according to the invention;
Figure 3 shows an electric diagram of a third embodiment of the control device according to the invention.

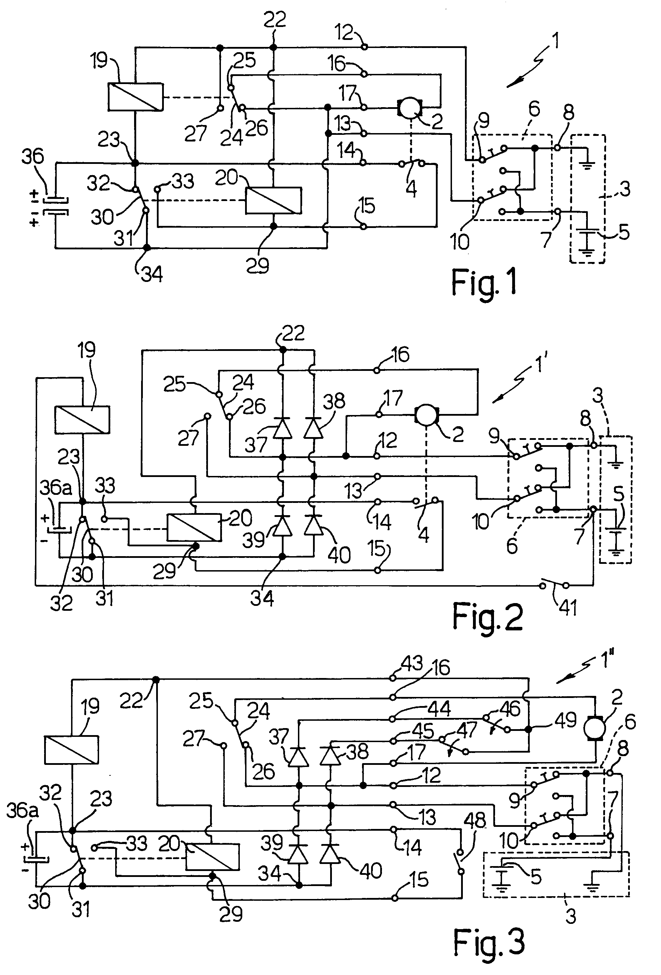

Number 1 in Figure 1 indicates a control device for controlling an electric motor 2, which is connected between a supply section 3 and motor 2.

Motor 2 is fitted with a limit switch 4 for detecting predetermined positions of the roof. More specifically, switch 4 is open when the roof is in the fully open, fully closed or fully raised position.

Supply section 3 comprises a continuous voltage source 5 generating a voltage V, and is connected to control device 1 via a switching device 6.

Switching device 6 (the electric equivalent of which is shown) is a three-position toggle switch having two inputs 7, 8 connected respectively to voltage source 5 and ground, and two outputs 9, 10 connected to respective inputs 12, 13 of control device 1. More specifically, the switch has a rest position wherein outputs 9, 10 are both grounded; a first operating position wherein outputs 9, 10 are connected respectively to voltage source 5 and ground; and a second operating position wherein outputs 9, 10 are respectively grounded and connected to voltage source 5.

Control device 1 also comprises a further two inputs 14, 15 and two outputs 16, 17; limit switch 4 is connected between inputs 14 and 15; and motor 2 is connected between outputs 16 and 17.

Control device 1 comprises a first and a second electromechanical relay 19, 20. The first relay 19 is located between two nodes 22, 23 connected respectively to inputs 12, 14, and comprises a two-position contact 24 in turn comprising a first terminal 25, a second terminal 26 and a third terminal 27 connected respectively to output 16, output 17 and input 12. Contact 24 is movable between a rest position (shown) wherein it shorts terminals 25 and 26; and an operating position wherein it shorts terminals 25 and 27.

Relay 20 is located between node 22 and a node 29 connected to input 15, and comprises a two-position contact 30 in turn comprising a first terminal 31, a second terminal 32 and a third terminal 33 connected respectively to a node 34 (connected to input 13) and to inputs 14 and 15. Contact 30 is movable between a rest position (shown) wherein it shorts terminals 31 and 32; and an operating position wherein it shorts terminals 31 and 33.

Control device 1 also comprises a capacitor 36 located between nodes 23 and 34, and which may comprise an unbiased electrolytic capacitor or (as shown) two capacitors biased in opposite directions.

Operation of control device 1 will now be described relative to the operation by motor 2 of a sun roof, which may assume a closed position, an open position, and a raised (open spoiler) position, the latter attainable solely as of the closed position.

To switch from the closed to the open roof position, switching device 6 is set to the first operating position, wherein output 9 is connected to voltage source 5 and output 10 is grounded, so that voltage V is applied between inputs 12 and 13, and is supplied between nodes 22 and 23 to energize relay 19 and so switch contact 24 to the operating position (terminals 25 and 27 shorted).

Input 12 is thus connected to output 16 to supply and start motor 2, which opens the roof and closes limit switch 4, connected to motor 2, so as to close shorted inputs 14, 15.

Input 15 is thus connected electrically to input 13, and voltage V is applied between nodes 22 and 29 to energize relay 20 and so switch contact 30 to the operating position (terminals 31 and 33 shorted).

To ensure correct operation of the device, capacitor 36 ensures continuous connection of nodes 23 and 34 as contact 30 switches from the rest to the operating position. In the absence of capacitor 36, in fact, as contact 30 switches, node 23 would float, thus de-energizing relay 19 and switching its contact 24 to the rest position, de-energizing relay 20 and switching its contact 30 to the rest position, and again energizing relay 19, thus resulting in an unstable situation in which contacts 24 and 30 switch continually and motor 2 is supplied discontinuously. Such a situation is prevented, however, by capacitor 36, which ensures node 23 is also grounded electrically as contact 30 switches. In other than the above operating condition, capacitor 36 is shorted by contact 30 and therefore ineffective.

When the roof reaches the fully open position, limit switch 4 opens so that node 23 is disconnected from input 13; relay 19 is de-energized so that contact 24 switches to the rest position shown; and output 16 is shorted with output 17 to cut off supply to motor 2.

In this condition, and as long as switching device 6 is maintained by the user in the first operating position, relay 20 remains energized, by virtue of contact 30 being in the shorted position between terminals 31 and 33, but is ineffective. When switching device 6 is reset to the rest position and input 9 once more grounded, relay 20 is de-energized, thus switching contact 30 to the rest position, so that the circuit returns to the initial condition.

To close the roof, switching device 6 is set to the second operating position wherein input 10 is connected to voltage source 5; and a voltage V, opposite to that applied previously, is applied between inputs 12 and 13 to supply the motor as described previously but in the opposite direction, so that motor 2 rotates in the opposite direction to close the roof.

To switch from the closed to the raised roof position, switching device 6 is set to the second operating position, and device 1 operates as described previously; and, to close the roof, switching device 6 is set to the first operating position.

Figure 2 shows the electric diagram of a control device 1', which differs from device 1 in Figure 1 in that relay 19 is connected to supply section 3 via the ignition key; a diode bridge 37-40 is provided; and, instead of unbiased capacitor 36, a biased electrolytic capacitor 36a is provided, with the positive pole on the node 23 side.

More specifically, relay 19 is located between node 23 and voltage source 5, and is connected to voltage source 5 via a switch 41 representing the vehicle ignition key; diode 37 has the anode connected to input 12, and the cathode connected to node 22; diode 38 has the anode connected to input 13, and the cathode connected to node 22; diode 39 has the anode connected to node 34, and the cathode connected to input 12; and diode 40 has the anode connected to node 34, and the cathode connected to input 13.

Operation of control device 1' will now be described only insofar as it differs from that of device 1.

In the case of device 1', the energizing of relay 19 by supply section 3 is controlled by ignition key 41. That is, when the key is inserted, switch 41 is closed, relay 19 is supplied, and its contact 24 switches. Motor 2, however, remains shorted to ground.

When switching device 6 is set to the first operating position, motor 2 is first supplied, and, when limit switch 4 closes, relay 20 is energized via diodes 37-40 so that contact 30 switches to the operating position. As before, capacitor 36a ensures node 23 is grounded during switching of contact 30, to prevent relay 19 from being de-energized. When the roof reaches the fully open position, limit switch 4 opens, so that relay 19 is de-energized, contact 24 switches to the rest position, and motor 2 is turned off.

When switching device 6 is reset to the rest position, relay 20 is de-energized, so that contact 30 also switches to the rest position.

Device 1' operates in the same way as described previously to switch the roof from the open to the closed and from the closed to the raised position.

Figure 3 shows the electric diagram of a third embodiment of the device according to the invention, and which is indicated 1'' and described below only insofar as it differs from that in Figure 2. In this embodiment, control device 1'' comprises a further three inputs 43, 44, 45 and three limit switches 46, 47, 48; limit switches 46 and 47 are connected on one side to respective inputs 44 and 45, and on the other to a common node 49 in turn connected to input 43; and limit switch 48 is connected between inputs 14 and 15 in place of limit switch 4.

Limit switches 46, 47, 48 are closed when the roof is moving, and are open when the roof is respectively open, raised and closed.

Moreover, in device 1'', the cathodes of diodes 37 and 38 are connected respectively to inputs 44 and 45; and relay 19 is connected between nodes 22 and 23 as in Figure 1.

Control device 1'' in Figure 3 operates in the same way as the previous devices, except for certain special characteristics described below.

To switch from the closed to the open roof position, to begin with switches 46 and 47 are closed and switch 48 open. When switching device 6 is set to the first operating position (in which output 9 is connected to voltage source 5), voltage V is supplied, via the diode bridge, between nodes 22 and 23, so that relay 19 is energized, its contact 24 switches to the operating position, and motor 2 is turned on; the resulting movement of the roof closes switch 48 so that relay 20 is energized and contact 30 switches; and, when the roof reaches the fully open position, switch 46 opens, thus disconnecting node 22 from supply section 3, de-energizing relays 19 and 20, and switching contacts 24 and 30 to the rest position.

When switching device 6 is reset to the rest position, there is no change in control device 1''.

To switch from the open to the closed roof position, switching device 6 is set to the second operating position in which output 10 is connected to voltage source 5; at which point, device 1'' operates in exactly the same way as described above, except that the motor is supplied, and therefore rotates, in the opposite direction to previously.

If the roof is fully closed and switching device 6 is set to the second operating position, the roof is raised. In which case, device 1'' operates in the same way as described above to open the roof, except that, when the roof reaches the fully raised position, switch 47 (as opposed to switch 46) opens to disconnect relays 19 and 20 from supply section 3.

As before, capacitor 36a of device 1'' in Figure 3 provides for stabilizing operation and preventing any oscillation during the switching of contact 30.

As compared with similar devices featuring active electronic components, the control device according to the invention has the advantage of being less affected by electromagnetic problems - in particular, less sensitive to external electromagnetic fields - thus enabling the device to operate reliably even in the presence of numerous other electric or electronic devices.

Clearly, changes may be made to the electric motor control device as described and illustrated herein without, however, departing from the scope of the present invention.

## Claims

1. A control device (1) for controlling an electric motor (2), in particular for a vehicle sun roof, and having a first, a second, a third and a fourth input (12-15), and a first and a second output (16, 17); said first and said second input (12, 13) being connectable to a supply section (3); said first and said second output (16, 17) being connectable to said electric motor (2); said third and said fourth input (14, 15) being connected to each other via a first limit switch (4); said control device (1) comprising a first electromechanical relay (19) having a first contact (24) and connectable between a first and a second reference potential node (7, 8) via switching means (6; 41); and said first contact (24) being movable between a first position connecting said first and said second output (16, 17), and a second position connecting said first input (12) and said first output (16); characterized by comprising a second electromechanical relay (20) connected between said first input (12) and said fourth input (15), and having a second contact (30) movable between a first position connecting said second (13) and said third (14) input, and a second position connecting said second input (13) and said fourth input (15).

2. A device as claimed in Claim 1, characterized by comprising capacitive means (36) connected in parallel to said contact of said second electromechanical relay (20).

3. A device as claimed in Claim 2, characterized in that said capacitive means comprise an unbiased electrolytic capacitor (36).

4. A device as claimed in Claim 2, characterized in that said capacitive means comprise a pair of capacitors biased in opposite directions.

5. A device as claimed in any one of the foregoing Claims, characterized in that said first electromechanical relay (19) is connected by a first terminal to said first input (12), and by a second terminal to said third input (14).

6. A device as claimed in any one of the foregoing Claims from 1 to 4, characterized in that said first electromechanical relay is connected by a first terminal to said first reference potential node (7) via an ignition device (41), and by a second terminal to said third input (14).

7. A device as claimed in Claim 6, characterized by comprising a diode bridge (37-40) having a first and a second input node connected respectively to said first input (12) and said second input (13), and a first and a second output node connected respectively to a first terminal of said second electromechanical relay (20) and a fixed terminal of said second contact (30).

8. A device as claimed in any one of the foregoing Claims from 1 to 4, characterized in that said first electromechanical relay (19) is connected by a first terminal to said first input (12), and by a second terminal to said third input (14); and by comprising a diode bridge (37-40) having a first and a second input node connected respectively to said first input (12) and said second input (13), and a first and a second output node connected respectively to a first terminal of said second electromechanical relay (20) and a fixed terminal of said second contact (30).

9. A device as claimed in Claim 8, characterized in that said diode bridge (37-40) comprises a first and a second diode (37, 38); said first diode (37) having a first terminal connected to said first input (12), and a second terminal connected to said first terminal of said second electromechanical relay (20) via a second limit switch (46); and said second diode (38) having a first terminal connected to said second input (13), and a second terminal connected to said first terminal of said second electromechanical relay (20) via a third limit switch (47).
